# EUROPEAN PATENT SPECIFICATION

(11) **EP 0 626 812 B1**
(45) Date of publication and mention of the grant of the patent: **30.07.1997**
(21) Application number: 93904064.8
(22) Date of filing: 26.02.1993
(51) Int. Cl.: A23L 3/3508, A23K 3/03

(54) **PRESERVATIVE COMPOSITIONS FOR A PLANT MATERIAL**
KONSERVIERUNGSMITTEL FÜR PFLANZLICHES MATERIAL
COMPOSITIONS D'AGENT DE CONSERVATION POUR DES PRODUITS VEGETAUX

(30) Priority: 27.02.1992 FI 920887
(43) Date of publication of application: 07.12.1994
(73) Proprietor: KEMIRA OY, SF-02271 Espoo (FI)
(72) Inventor: AHLNÄS, Thomas, SF-00270 Helsinki (FI); RAURAMAA, Aino, SF-00220 Espoo (FI); LÖFGREN, Timo, SF-02360 Espoo (FI)
(74) Representative: Gilding, Martin John
(86) International application number: FI9300068
(87) International publication number: WO9316611

(56) References cited:
- GB-A- 2 008 381
- GB-A- 2 095 534
- US-A- 3 600 198

## Description

The invention relates to a composition suitable for an additive of a plant material, containing aliphatic C₂-C₃ carboxylic acid and benzoic acid or hydroxybenzoic acid, the said acids optionally at least partly in the form of salts or esters.

Benzoic acid and certain of its derivatives are previously known as preservatives in, for example, foods and animal forage. The poor solubility of benzoic acid in water and in aqueous acid mixtures is also known.

The use of carboxylic acids for the preservation of products associated with agriculture is also well known. According to the AIV process, green forage will keep when its pH is lowered to below 4 by means of acids. At present, formic acid is increasingly used for the lowering of pH.

The preservative according to FI Patent 61790 (Huitson, BP Chemicals) contains formic acid which has been partly neutralized with ammonia. The preservative composition may additionally contain, for example, acetic acid, propionic acid, or butyric acid.

The preservative composition according to GB patent 1,481,961 (Huitson & Watts, BP Chemicals) contains C5-C8 monocarboxylic acid in addition to propionic acid, n-butyric acid and/or iso-butyric acid. The use of octanoic acid, for its part, is known according to FI application 903761 (Huitson, BP Chemicals) in preservative compositions based on formic acid. The compositions described in the application contain water 10-50%, and besides formic acid they also contain propionic acid. The acids are preferably partly neutralized with ammonia.

On the basis of US patent 3,600,198 compositions of propionic acid/Na-propionate and benzoic acid/Na-benzoate having the volume ratios of 70:30 and 95:5, which are intended for preserving fish. The drawback of these compositions is the high price and they are, therefore, suitable only in special occasions. As a preservative of green forage they, for example, are not capable of competing.

FI patent 63328 (Lampila) discloses a preservative composition which contains a constituent which increases the hydrogen ion concentration in forage and a benzoic acid constituent which acts synergistically with it and may be benzoic acid or its salt or derivative.

The preservative composition according to this patent is said to be in the form of either a solid or a solution. It is evident from the patent text that benzoic acid is insoluble in acid, and therefore it is dispersed to form as homogeneous a suspension as possible by using thickening and gelling agents known per se. Methods for bringing the benzoic acid constituent into a liquid form are not presented.

The problem involved in the preservative composition according to FI patent 63328 is thus that the benzoic acid constituent is present in the form of particles. Even if a well formulated fresh suspension were relatively problem-free, its storage causes instability through the particle size becoming coarser. In particular, sedimentation is to be expected if the product happens to freeze temporarily, in which case the thickeners usually lose their activity. It is also evident that the use of gels is more difficult than the use of liquid compositions. Also, benzoic acid in the form of particles will not become distributed into the grass material to be preserved as well as would a liquid acid.

The object of the present invention is to provide a stable liquid composition, suitable for a preservative and containing benzoic acid or its derivative. The primary object is to eliminate the problems of insolubility and sedimentation involved in state-of-the-art products.

This has been accomplished by means of a composition according to the present invention, suitable for a preservative and containing benzoic acid or its derivative, the composition being characterized in that it is brought into stable liquid form and comprises the following components:
(1) 5-25% of the weight of the composition of benzoic acid, salt of benzoic acid, ester of benzoic acid, hydroxybenzoic acid, salt of hydroxybenzoic acid, or ester of hydroxy benzoic acid,
(2) 60-95% of the weight of the composition propionic acid and formic acid, propionic acid and acetic acid, or propionic acid, formic acid and acetic acid,
(3) 0-10% of the weight of the composition of aliphatic C₄-C₁₀ monocarboxylic acids, esters of aliphatic C₄-C₁₀ monocarboxylic acids, surface active C₁₀-C₂₀ fatty acids, surface active derivatives of C₁₀-C₂₀ fatty acids, alcohols, polyalcohols, polymers acting as thickening agents, and
(4) 0-30% of the weight of the composition water.

The compositions according to the invention are especially well suited to be used as preservatives in foods and in products associated with agriculture, in order to inhibit the growth of micro-organisms such as bacteria, mold fungi and yeasts.

By stable liquid form of the composition is meant here a clear solution or micro-emulsion, or an emulsion-like composition in which the undissolved matter is visible only in the opalescent color. Sedimentations or crystallizations may form even in a stable composition such as this, for example, during storage at too low a temperature, but when the temperature is raised the stable state returns.

The concentration of the benzoic acid or its derivative in the composition preferably is about 5-20% by weight. It is still more preferable if the quantity of benzoic acid is 7-15% by weight. There can also be a small quantity of water, e.g. about 0-20% by weight, preferably about 1-10% by weight. The highest quantities of benzoic acid or its derivative occur at the lower quantities of formic acid and water.

The benzoic acid component can be in the form of benzoic acid or its salt, such as sodium benzoate or ammonium benzoate. Suitable derivatives of benzoic acid for a preservative of plant material are p-hydroxybenzoic acid and its esters, such as methyl, ethyl, propyl or butylesters, the preferable quantity being about 0.5-2% by weight.

According to one embodiment of the invention, the preservative composition contains in addition to benzoic acid and its derivative acetic acid, propionic acid and optional additives, formic acid failing. The total amount of the acetic acid and the propionic acid in the composition is at least 60% by weight and preferably 95% by weight at the most. Thereby, it is preferable if the benzoic acid is in the form of a salt, the preferable salt concentration being 20-80% of the total amount of the benzoid acid.

According to another embodiment of the invention, the preservative composition contains in addition to benzoic acid and its derivative formic acid, propionic acid and optional additives, acetic acid failing or being included. Thereby, the quantity of formic acid preferably is about 30-90%, most preferably about 40-70% of the weight of the composition. The weight ratio of the formic acid to the acetic acid and/or benzoic acid is thereby preferably about 10:1-1:10, most preferably about 4:1-1:4. The combined amount of formic acid, propionic acid and the optional acetic acid in the composition preferably is about 60-90% by weight. In the composition containing benzoic acid or its derivative, formic acid, propionic acid and optionally acetic acid, the benzoic acid or its derivative and the formic acid serve substantially as preservative constituents, whereas the propionic acid and the optional acetic acid or their derivative serve as a stabilizer for maintaining the benzoic acid or its derivative in liquid form. The formic acid can at least partly be in the form of its ester, such as ethyl formate.

The adding of aliphatic monocarboxylic acids or their esters having 4-20 carbon atoms in their carboxylic chain to compositions containing benzoic acid or its derivative and optionally formic acid, acetic acid and/or propionic acid proved to be surprisingly useful. The water dilutability of the composition improved in this case so that benzoic acid formed a sediment only with larger additions of water or at a lower temperature than without the addition. In the presence of C₆-C₁₂ and C₈-C₁₀ carboxylic acids or their esters there evidently forms a micro-emulsion which very efficiently dissolves benzoic acid or its derivative and widens the stability range of the composition. C₆-C₁₂ carboxylic acids are especially preferred C₄-C₁₀ carboxylic acids and the most preferable are octanoic, nonanoic and decanoic acids. Typical esters of C₄-C₂₀ carboxylic acids are glycerol or propylene-glycol esters. The amounts of optionally occurring acids of their esters preferably are 0.5-10%, most preferably 1-5% of the weight of the composition.

Those surface-active aliphatic monocarboxylic acids and their derivatives which are in general used for forming and stabilizing emulsions also had an advantageous effect. The surface-active esters and salts of C₁₀-C₂₀ fatty acid were advantageous. Although the invention is not limited to the use of any certain types of surface-active aliphatic monocarbons or their derivatives, those surface-active agents which have been accepted for use as emulsifiers in forages are given priority. These include lecithin, lactic acid esters, polyethylene glycol-glycerol fatty acid esters, polyglycerol fatty acid esters, polyoxyethylene-ricin oleate, polyoxyethylene(8)monostearate, polyoxyethylene(20)sorbitan mono-oleate, the potassium, sodium, calcium and ammonium (organic and inorganic) salts of fatty acids, and the mono- and diglycerides of fatty acids. Good results in terms of the inhibition of crystallization were also achieved with surface-active agents which are cationic in the conditions of use. These include primary, secondary, tertiary and quaternary amines and amphoteric surface-active agents. The surface-active component is preferably used in an amount of about 0.2-3% of the weight of the composition.

It was also observed that additives of alcohol and polyalcohol types, such as ethanol, sugars, glycols, polyglycols, and glycerol, promoted the crystallization inhibition action at a dose of 0.5-10%, especially if other additives according to the invention were used simultaneously. If a greater toleration of cold is required of a preservative composition, the alcohol content may be increased. Urea can be added, too, for example the amount mentioned above.

In the stable compositions according to the invention, acids tend to form esters with the alcoholic additives present. In the products according to the invention there may thus be various esters of them present in addition to the raw material constituents. Without deviating from the invention it is possible to add to the preservative composition the agents according to the invention, containing esterifying hydroxyl groups, in an already esterified form. Ethyl formate was found to be a particularly usable ester.

During the preparation and storage of the preservative solution, esters are formed between the acids and alcoholic constituents used. The presence of these esters (glycerol, propylene glycol, etc., formic acid, propionic acid, octanoic acid, etc., esters, and mixed esters) in preservative compositions is thus natural and in accordance with the invention.

Crystallization was further retarded by adding to the solution amounts of polymers, such as agar-agar, alginates, gelatine, guar gum, carrageen, collagen, xanthate gum, pectin, tragacanth, and carboxymethyl cellulose, all known as thickener additives of preservatives. Other polymers which work include polyvinyl alcohol. The amounts used are, depending on the polymer, approx. 0.1-0.5 % by weight, and smaller than when they are used as thickeners.

In the experiments performed it has, moreover, been noted that a low water content, about 2-5% by weight, is advantageous. Among others, it inhibits a sudden solidification of the composition into solid form, which phenomenon can take place when cooling fully non-aqueous formulates into freezing.

As can be seen from the examples, the best results are obtained by using at the same time several alternatives according to the invention.

A number of examples are presented below to illustrate the invention.

Of the substances used in the examples, glycerolmonolinoleate (Dimodan LS) was melted before use by heating to 40 °C. All the formulae are given in parts by weight, unless otherwise indicated. At first, an attempt was made to determine the crystallization or sedimentation temperatures of the test samples by cooling the samples. It was shown that in cooling tests of a few hours, some of the samples remained clear liquids even at -18 °C. Very great differences were observed among the various test formulations in the starting of crystallization and in the rate of crystallization. On the other hand, an attempt was made by adding water at room temperature to find a critical water content at which a sediment begins to form. Similar variations were observed in these experiments also. Therefore the experiments were in general performed so that a prepared test solution was batched into several test tubes in an amount of 10 g. Into these, 0, 1, 2 g, etc., of water was added, whereupon a dilution series was obtained of each sample. Sediments were observed by storing the test tube series of the experiments for several hours, usually several days, at temperatures of 22, 9 and 3 °C. The critical water content is indicated in the examples as a range, e.g. 17-24%, in which case a solution which contained water 17% was clear, but the next tube, which contained water 24%, had a crystallization or a sedimentation. The notation <9% means that not even the undiluted sample was clear, and >35% indicates that all the dilutions tested were clear solutions.

### Example 1

### Reference example, i.e. prior art according to FI patent 63328

A series of benzoic acid/formic acid and Na-benzoate/formic acid compositions were prepared, in which the concentration of benzoic acid or Na-benzoate varied within the range 2-60%, and the moisture content was below 1%. Water-containing dilution series of the samples were prepared, and they were stored at temperatures of 22, 9 and 3 °C. It was observed that the solutions remained clear only if the amount of benzoic acid or Na-benzoate in the original water-free compositions had been at maximum approx. 5% of the amount of formic acid. Even in the 5% samples, crystallization occurred in all the test tubes which contained water, especially at 3 °C. The more the ratio of benzoic acid or Na-benzoate to formic acid was increased, the thicker the crystal suspension which resulted at all test temperatures, both in the water-free and the aqueous samples.

### Examples 2a-2c

A preservative solution was prepared by dissolving 10 g of Na-benzoate in 90 g of propionic acid and 3:1, 2:1 and 1:1 (weight ratios) mixtures of propionic acid and formic acid, and a water dilution series of each composition was made.

| Example | 2a | 2b | 2c |
|---|---|---|---|
| Propionic acid/formic acid | 3:1 | 2:1 | 1:1 |

| Critical water content: | | | |
|---|---|---|---|
| 22 °C | *) | *) | 47-50 |

| | | | |
|---|---|---|---|
| *) No crystallizations or sedimentations at the water contents studied, 0-50%. | | | |

### Examples 2d-2f

A preservative solution was prepared by dissolving 20 g of benzoic acid in 80 g of propionic acid and 3:1, 2:1 and 1:1 (weight ratios) mixtures of propionic acid and formic acid, and a water dilution series of each composition was made.

| Example | 2d | 2e | 2f |
|---|---|---|---|
| Propionic acid/formic acid | 3:1 | 2:1 | 1:1 |

| Critical water content: | | | |
|---|---|---|---|
| 22 °C | 17-23 | appr.17 | 0-5 |

| | | | |
|---|---|---|---|
| *) No crystallizations or sedimentations at the water contents studied, 0-50%. | | | |

### Examples 3-7

Preservative compositions for plant material was prepared by mixing the liquid substances with each other, by adding thereafter the glycerol ester in melted form and by finally adding the benzoic acid. The mixing was carried out at the temperature of about 40°C, until all the solid material was dissolved.

| Example | 3 | 4 | 5 | 6 | 7 |
|---|---|---|---|---|---|
| Acetic acid (85%) | 60 | - | - | - | - |
| Formic acid (85%) | - | 60 | 55 | 60 | 50 |
| Acetic acid (100%) | - | - | 5 | 5 | 10 |
| Propionic acid | 30 | 30 | 30 | 25 | 30 |
| Benzoic acid | 9.4 | 9.4 | 9.4 | 9.4 | 9.4 |
| Octanoic acid | 4 | 4 | 4 | 4 | 4 |
| Dimodan LS | 1 | 1 | 1 | 1 | 1 |
| Crystallization time at 3°C | >5 d | >5 d | >5 d | 1-5 d | >5 d* |

| Critical water content, % | | | | | |
|---|---|---|---|---|---|
| 22 °C, 5-8 h | >44 | - | 17-24 | - | >35 |
| 9 °C, 10-12 h | >44 | - | 17-24 | - | 24-30 |
| 3 °C, approx. 1 week | 40-44 | appr.9 | 17-24 | <9 | 16-24 |

| | | | | | |
|---|---|---|---|---|---|
| *) >5 d: no crystallizations within 5 days. | | | | | |

By replacing a portion of the formic acid in the formula of the example 4 by acetic acid (ex. 5) or by propionic acid a clear improvement was achieved. On the other hand, the replacement of propionic acid by acetic acid worsens the result (ex. 4 and 6).

### Examples 8-12

Various monocarboxylic acids were experimented with as auxiliary agents.

| Composition | |
|---|---|
| Formic acid (85%) | 60 |
| Benzoic acid | 9.4 |
| Propionic acid | 30 |
| Dimodan LS | 1 |
| Monocarboxylic acid | 4 |

| Example | Monocarboxylic acid | Storage trial at 3 °C |
|---|---|---|
| 8 | C₅-COOH | crystallized |
| 9 | C₇-COOH | did not crystallize |
| 10 | C₇-COOH (industrial) | did not crystallize |
| 11 | C₅-COOH + C₉ - COOH 1:1 | did not crystallize |
| 12 | C₉-COOH | crystallized |

It is seen that the best auxiliary agent in terms of maintaining benzoic acid soluble was octanoic acid. A mixture of C₆ and C₁₀ carboxylic acids also worked in its stead.

### Examples 13-19: Compositions containing ethanol

| | 13 | 14 | 15 | 16 | 17 | 18 | 19 |
|---|---|---|---|---|---|---|---|
| Formic acid, 85% | 60 | 60 | 60 | 60 | 60 | 60 | 60 |
| Benzoic acid | 8 | 8 | 8 | 8 | 8 | 8 | 8 |
| Propionic acid | 30 | 30 | 30 | 30 | 30 | 30 | 30 |
| Octanoic acid | - | 2 | 5 | - | 2 | 5 | 2 |
| Ethanol | 2 | 2 | 2 | 5 | 5 | 5 | - |

| Crystallization at 3 °C | | | | | | | |
|---|---|---|---|---|---|---|---|
| 1 week | yes | no | no | yes | no | no | yes |
| 4 weeks | yes | no | no | yes | yes | no | yes |

### Examples 20-24: Compositions containing propylene glycol (laboratory chemicals)

| | 20 | 21 | 22 | 23 | 24 |
|---|---|---|---|---|---|
| Formic acid, 90% | 60 | 60 | 60 | 60 | 60 |
| Propionic acid | 27 | 27 | 27 | 27 | 27 |
| Benzoic acid | 9 | 9 | 9 | 9 | 9 |
| Octanoic acid | 1.67 | 1 | 2 | 3 | 4 |
| Propylene glycol | 1.67 | 3 | 2 | 1 | 0 |
| Dimodan LS | 1.67 | - | - | - | - |

| Storage trial at +3 °C | | | | | |
|---|---|---|---|---|---|
| Crystallization | no | no | no | no | yes |
| Critical water content, % | 15-23 | 6-15 | 6-15 | 6-15 | (<6) |

### Examples 25-28: Compositions containing propylene glycol (industrial chemicals)

| | 25 | 26 | 27 | 28 |
|---|---|---|---|---|
| Formic acid, 90% | 60 | 60 | 60 | 60 |
| Propionic acid | 27 | 27 | 27 | 27 |
| Dimodan LS | - | 3 | 3 | 3 |
| Propylene glycol | - | 2 | 5 | - |
| Octanoic acid | - | - | - | 2 |
| Benzoic acid | 9 | 9 | 9 | 9 |

| Storage test at +3 °C | | | | |
|---|---|---|---|---|
| Crystallization | yes | no | no | no |
| Critical water content, % | (<6) | 15-23 | 23-29 | 23-29 |

### Examples 29-31: Ethanol-rich compositions

| | 29 | 30 | 31 |
|---|---|---|---|
| Na-benzoate | 11 | 10.9 | 10.5 |
| Propionic acid | 22 | 21.8 | 21.1 |
| Ethanol | 22 | 21.8 | 21.1 |
| Dimodan LS | 1 | 2 | 5 |
| Formic acid, 85% | 44 | 43.5 | 42.3 |
| Sedimentation at +3 °C (1 week) | no | no | no |
| Crystallization at -18 °C (16 h) | yes | no | yes |

### Example 32: Sorbitol esters as additives

Preservative compositions were prepared by dissolving 10 parts of benzoic acid in a mixture which contained 30 parts of propionic acid and 60 parts of an 85% formic acid and 0-5 parts of Span 80 sorbitol mono-oleate (Span 80). The last-mentioned sped up the dissolving of benzoic acid and formed an oily film on the liquid surface when the samples were left standing. When Tween 80 (a polyethoxylated sorbitol mono-oleate) was added together with Span 80, Span dispersed into the solution. In the presence-of surface-active agents the crystallization of benzoic acid was retarded when the composition was cooled. Carboxymethyl cellulose (Finnfix 10) at approx. 0.1% promoted the retarding of crystallization.

### Examples 33-36: Retarding effect of surface-active agent Dimodan LS on the freezing of the composition

| Example | 33 | 34 | 35 | 36 |
|---|---|---|---|---|
| Formic acid, 85% | 80 | 80 | 80 | 80 |
| Benzoic acid | 10 | 10 | 10 | 10 |
| Propionic acid | 50 | 50 | 50 | 50 |
| Dimodan LS | - | 0.5 | 1 | 2 |
| Freezing at -18 °C * | yes | yes | no | no |

| | | | | |
|---|---|---|---|---|
| *) approx. 16 h | | | | |

### Example 37

### Polyvinyl alcohol as a stabilizing polymer

A preservative solution was prepared by using 60 parts of 90% formic acid, 9 parts of benzoic acid, 2.5 parts of propylene glycol, and 2.5 parts of Dimodan LS. Various polyvinyl alcohols in amounts of 0.5% were experimented with as additives. Polyvinyl alcohol increased the water content critical in terms of crystallization at 3 °C (0-15 % without polymer, 15-22% with polymer). A hydrolyzed polyvinyl alcohol of a relatively high viscosity worked best.

### Examples 38 and 39: Urea and glycerol as additives

Urea (ex. 38) and glycerol (ex. 39) were experimented with by using a dose of 4.9 parts in a formulation in which the other ingredients were 53.8 parts of a 90% formic acid, 29.4 parts of propionic acid, 9 parts of benzoic acid, 2 parts of octanoic acid, and 0.5 parts of Dimodan LS. Good solutions were obtained which remained uncrystallized in a storage trial at 3 °C.

### Examples 40-45: Ethyl formate

### Examples 40-41

Benzoic acid was first dissolved in ethyl formate and propionic acid before the adding of the other constituents.

| Example | 40 | 41 |
|---|---|---|
| Benzoic acid | 9 | 9 |
| Ethyl formate | 18 | 18 |
| Propionic acid | 36 | 36 |
| Dimodan LS | 0 | 1 |
| Formic acid (85%) | 36 | 36 |

Both samples remained uncrystallized at 3 °C and withstood short-term cooling to -18 °C.

### Examples 42-45: Compositions containing parahydroxybenzoic acid esters

| Example | 42 | 43 | 44 | 45 |
|---|---|---|---|---|
| Formic acid, 90% | 55 | 55 | 55 | - |
| Ethyl formate | - | - | - | 50 |
| Water | - | - | - | 5 |
| Propionic acid | 38 | 38 | 38 | 38 |
| Benzoic acid | 7 | 6 | 6 | 6 |
| Propylparaben | - | 1 | - | 1 |
| Methylparaben | - | - | 1 | - |

The benzoic acid was first dissolved into liquid raw-materials by heating the composition to about 40 °C. Then propylparahydroxybenzoic acid (Propylparaben) or methyl parahydroxybenzoinc acid (Methylparaben) was added, which dissolved quickly. After the test solutions had cooled down they were transferred to a cold-storage at the temperature of +4 °C. A thick sedimentation was formed in the solution of example 42, the samples containing parahydroxybenzoic acid ester remaining clear solutions. It was observed that a partial replacement of benzoic acid by hydroxybenzoic acid esters retards the crystallization.

### Examples 46-61

Various carboxylic acids and esters as preservative additives. The compositions were carried out with the recipe.

| | |
|---|---|
| Formic acid, 90% | 56 parts by weight |
| Propionic acid | 30 parts by weight |
| Benzoic acid | 9 parts by weight |
| Additive | 5 parts by weight |

The influences of the additives and the additive combinations on the storing stability of the test samples at the temperature of +4 °C during a storage time of about half a year were compared. The reference sample was one in which the additive had been replaced by propionic acid. Permanent sediment was formed in this sample after a storage of about two weeks. In some of the test samples according to the following examples there might have been formed an insignificant sediment during 2-3 weeks, but after the chemical balance had settled they were clear and sediment-free until the end of the test.

| Example | Additive |
|---|---|
| 46 | Linolenic monoglyceride + propylene glycol 1:1 |
| 47 | C₈-C₁₀ glyceride, >50% monoglyceride |
| 48 | The former glyceride + propylene glycol 1:1 |
| 49 | The former glyceride + glycerol 1:1 |
| 50 | The former glyceride + octanoic acid 1:1 |
| 51 | The former glyceride + 2-ethylhexanoic acid 1:1 |
| 52 | Octanoic acid |
| 53 | Dicarboxylic acid composition (succinic, glutaric and adipic acid) |
| 54 | Octanoic acid + oxalic acid 1:1 |
| 55 | 2-ethylhexanoic acid |
| 56 | Octanoic acid + 2-ethylhexanoic acid + decanoic acid 2:1:1 |
| 57 | C₈ mono/di/triglyceride 25:48:24 |
| 58 | C₈ mono/di/triglyceride 40:38:12 |
| 59 | C₁₂ monoglyceride, partly acetylated |
| 60 | C₈-C₁₀ monoglyceride, >70% α-form + propionic acid 1:1 |
| 61 | The former glyceride + glycerol 1:1 |

### Example 62

### Transformation of monoglyceride in storage

A preservative composition was prepared with the formula:

| | |
|---|---|
| Formic acid, 99% | 54.0% by weight |
| Propionic acid, 97.5% | 34.0% by weight |
| Benzoic acid | 9.0% by weight |
| C₈-monoglyceride | 1.0% by weight |
| Water | 2.0% by weight |

In the monoglyceride used over 70% was of α-form. The substances were mixed at the temperature of 40 °C until the benzoic acid had dissolved.

Examples 63-65 relate to the use of the preservatives according to the invention in the preservation of forage.

Green forage was preserved by AIV technique by mixing in it 5 liters/ton of the following preservative solutions:

| Example | 63 | 64 |
|---|---|---|
| Formic acid, 85% | 43.5 | 57.4 |
| Propionic acid | 21.7 | 16.4 |
| Benzoic acid | 10.9 | - |
| Na-benzoate | - | 8.2 |
| Ethyl formate | 21.7 | 16.4 |
| Glycerol monolinoleate | 2.2 | 1.6 |

In the forage samples containing preservative abundantly of sugars were formed, but acetic acid, which shows the mixed fermentation, clearly less than in the reference test.

### Example 65

A test was carried out, in which green forage was preserved by baleing method.

The consistence of the preservative was:

| | |
|---|---|
| Formic acid, 90% | 56.0% by weight |
| Propionic acid | 30.0% by weight |
| Benzoic acid | 9.0% by weight |
| Glycerol monolinoleate | 2.5% by weight |
| Propylene glycol | 2.5% by weight |

The grass to be preserved was cut and was allowed to dry partly. Then it was swathed and packed by a baler machine. Preservative solution was fogged to the grass to be baled in the most even and covering manner and the pale was packed tightly inside a plastic film. Of the preservative was used 5 liters/ton of forage. The reference preservative consisted of a solution containing 80% by weight of formic acid and 2% by weight of ortophosphoric acid. The forage bales were prepared in June and the state of the bales was checked in November.

The results were:

| | |
|---|---|
| Solution of the invention: | 3% of spoiled pales |
| Reference solution: | 18% of spoiled pales |
| No preservative: | 48% of spoiled pales |

### Example 66

20 g of Fusarium culmorum seed solution per 30 g of air dry grain mixture (oats, wheat, barley 1:1:1) were mixed. After 5 minutes the excess amount of the liquid was poured away. 0.12 mg and 0.24 mg of preservatives were added to the damp grains and a careful mixing was carried out. The samples were shut in an airtight vessel for 0.5 days, after which a part of the sample was poured in a Petri-bowl on two damp sheets of filter paper. The covered Petri-bowls were put in a plastic bag in a heating chamber (28 °C) for 6 days. The scale used in the assessment of the mold fungi was:
3 = fully covered by mold fungi
0 = no mold fungi at all

The preservative A contained 54% by weight of formic acid (of 99%), 34% by weight of propionic acid (of 97.5%), 9.0% by weight of benzoic acid, 1.0% by weight of C₈ monoglyceride and 2% by weight of water. The preservative B contained ethyl formate and benzoic acid in the ratio 80:20, and, moreover, 2% by weight of C₈ monoglyceride.

The results as averages of three parallel experiments were the following:

| Preservative | Affected by mold fungi with a dose of 0.12 mg and 0.24 mg | |
|---|---|---|
| No preservative | (3.0) | (3.0) |
| Benzoic acid (comparison) | 1.5 | 2.0 |
| Ethyl formate (comparison) | 1.5 | 1.2 |
| Preservative A | 0.0 | 0.0 |
| Preservative B | 0.8 | 0.6 |

## Claims

1. A composition suitable for an additive of plant material and containing aliphatic C₁-C₃ carboxylic acid and benzoic acid or hydroxybenzoic acid, said acids optionally at least partly in the form of salts or esters, **characterized** in that it is in stabile liquid form and comprises the following components:
(1) 5-25%, of the weight of the composition, of benzoic acid, salt of benzoic acid, ester of benzoic acid, hydroxybenzoic acid, salt of hydroxybenzoic acid, or ester of hydroxy benzoic acid,
(2) 60-95%, of the weight of the composition, of propionic acid and formic acid, propionic acid and acetic acid, or propionic acid, formic acid and acetic acid,
(3) 0-10%, of the weight of the composition, of an aliphatic C₄-C₁₀ mono-carboxylic acid, ester of aliphatic C₄-C₁₀ monocarboxylic acid, surface active C₁₀-C₂₀ fatty acid, surface active derivative of C₁₀-C₂₀ fatty acid, alcohol, polyalcohol, or polymer acting as thickening agent, and
(4) 0-30%, of the weight of the composition, of water

2. A composition according to Claim 1, **characterized** in that the amount of the benzoic acid and/or hydroxybenzoic acid is about 5-20% by weight.

3. A composition according to Claim 1 or 2, **characterized** in that it contains methyl, ethyl, propyl or butylester of p-hydroxybenzoic acid, the preferable amount being about 0.5-2% by weight.

4. A composition according to any of the claims 1-3, **characterized** in that the component (2) consists of propionic acid and acetic acid.

5. A composition according to Claim 4, **characterized** in that the component (1) consists of benzoic acid and a salt of benzoic acid, said salt portion preferably being about 20-80% of the total weight of the components (1).

6. A composition according to any of the claims 1-3, **characterized** in that the component (2) consists of propionic acid and formic acid, or propionic acid, formic acid and acetic acid.

7. A composition according to Claim 6, **characterized** in that the amount of the formic acid is about 30-90%, preferably about 40-70% of the total weight of the composition.

8. A composition according to Claim 6 or 7, **characterized** in that the formic acid of the component (2) is at least partly in the form of its ester, preferably in the form of ethyl formate.

9. A composition according to any of the preceding claims, **characterized** in that the amount of the component (1) is 5-20%, preferably about 7-15%, of the weight of the composition, and the component (4) is below 20%, and preferably about 1-10% of the weight of the composition.

10. A composition according to any of the preceding claims, **characterized** in that the component (3) consists of C₄-C₂₀ carboxylic acid or its derivative, preferably a liquid carboxylic acid or its derivative.

11. A composition according to Claim 10, **characterized** in that it contains 0.5-10% by weight of said C₄-C₂₀ carboxylic acid or its derivative.

12. A composition according to Claim 10 or 11, **characterized** in that the C₄-C₂₀ carboxylic acid or its derivative is a C₆-C₁₂ carboxylic acid or its ester, preferably C₇-C₁₀ carboxylic acid or its glycerol or propyleneglycol ester.

13. A composition according to Claim 10 or 11, **characterized** in that the C₄-C₂₀ carboxylic acid or its derivative is a surface-active C₁₀-C₂₀ carboxylic acid or a surface-active ester of C₄-C₂₀ carboxylic acid.

14. A composition according to Claim 13, **characterized** in that the surface-active ester of the C₄-C₂₀ carboxylic acid is a glycerol or carbohydrate ester, possibly in polyethoxylated form, the preferable used amount being about 0.2-3% of the weight of the composition.

15. A composition according to any of the preceding claims, **characterized** in that the component (3) consists of urea.

16. A composition according to any of the preceding claims, **characterized** in that the component (3) consists of alcohol or polyol, preferably glycerol or propyleneglycol.

17. A composition according to Claim 15 or 16, **characterized** in that the amount of the urea, alcohol or polyol is 0.5-10% of the weight of the composition.

## Patentansprüche

1. Zusammensetzung, die für ein Additiv für planzliches Material geeignet ist und aliphatische C₁-C₃ Carbonsäure und Benzoesäure oder Hydroxybenzoesäure enthält, wobei die Säuren optional zumindest teilweise in der Form von Salzen oder Estern vorliegen,
dadurch gekennzeichnet, daß sie in stabiler flüssiger Form vorliegt und die folgenden Bestandteile aufweist:
(1) 5-25 %, von dem Gewicht der Zusammensetzung, Benzoesäure, Salz von Benzoesäure, Ester von Benzoesäure, Hydroxybenzoesäure, Salz von Hydroxybenzoesäure, oder Ester von Hydroxybenzoesäure,
(2) 60-95 %, von dem Gewicht der Zusammensetzung, Propionsäure und Ameisensäure, Propionsäure und Essigsäure, oder Propionsäure, Ameisensäure und Essigsäure,
(3) 0-10 %, von dem Gewicht der Zusammensetzung, einer aliphatischen C₄-C₁₀ Monocarbonsäure, Ester von aliphatischer C₁-C₁₀ Monocarbonsäure, oberflächenaktive C₁₀-C₂₀ Fettsäure, oberflächenaktives Derivat von C₁₀-C₂₀ Fettsäure, Alkohol, Polyalkohol oder als Verdickungsmittel wirkendes Polymer, und
(4) 0-30 %, von dem Gewicht der Zusammensetzung, Wasser.

2. Zusammensetzung nach Anspruch 1,
dadurch gekennzeichnet, daß die Menge von der Benzoesäure und/oder Hydroxybenzoesäure ungefähr 5-20 Gew.-% beträgt.

3. Zusammensetzung nach Anspruch 1 oder 2,
dadurch gekennzeichnet, daß sie Methyl, Äthyl, Propyl oder Butylester von p-Hydroxybenzoesäure enthält, wobei die bevorzugte Menge ungefähr 0,5-2 Gew.-% beträgt.

4. Zusammensetzung nach einem der Ansprüche 1-3,
dadurch gekennzeichnet, daß der Bestandteil (2) aus Propionsäure und Essigsäure besteht.

5. Zusammensetzung nach Anspruch 4,
dadurch gekennzeichnet, daß der Bestandteil (1) aus Benzoesäure und einem Salz von Benzoesäure besteht, wobei der Salzanteil vorzugsweise ungefähr 20-80 % von dem Gesamtgewicht der Bestandteile (1) beträgt.

6. Zusammensetzung nach einem der Ansprüche 1-3,
dadurch gekennzeichnet, daß der Bestandteil (2) aus Propionsäure und Ameisensäure, oder Propionsäure, Ameisensäure und Essigsäure besteht.

7. Zusammensetzung nach Anspruch 6,
dadurch gekennzeichnet, daß die Menge der Ameisensäure ungefähr 30-90 %, vorzugsweise ungefähr 40-70 % von dem Gesamtgewicht der Zusammensetzung beträgt.

8. Zusammensetzung nach Anspruch 6 oder 7,
dadurch gekennzeichnet, daß die Ameisensäure von dem Bestandteil (2) zumindest teilweise in der Form von seinem Ester vorliegt, vorzugsweise in der Form von Äthyl-Formiat.

9. Zusammensetzung nach einem der vorhergehenden Ansprüche,
dadurch gekennzeichnet, daß die Menge des Bestandteils (1) 5-20 %, vorzugsweise ungefähr 7-15 %, von dem Gewicht der Zusammensetzung beträgt, und daß der, Bestandteil (4) weniger als 20 % und vorzugsweise ungefähr 1-10 % von dem Gewicht der Zusammensetzung beträgt.

10. Zusammensetzung nach einem der vorhergehenden Ansprüche,
dadurch gekennzeichnet, daß der Bestandteil (3) aus C₄-C₂₀ Carbonsäure oder ihrem Derivat, vorzugsweise einer flüssigen Carbonsäure oder ihrem Derivat besteht.

11. Zusammensetzung nach Anspruch 10,
dadurch gekennzeichnet, daß sie 0,5-10 Gew.-% der C₄-C₂₀ Carbonsäure oder ihrem Derivat enthält.

12. Zusammensetzung nach Anspruch 10 oder 11,
dadurch gekennzeichnet, daß die C₄-C₂₀ Carbonsäure oder ihr Derivat eine C₆-C₁₂ Carbonsäure oder deren Ester, vorzugsweise eine C₇-C₁₀ Carbonsäure oder deren Glyzerol- oder Propylenglykol-Ester ist.

13. Zusammensetzung,nach Anspruch 10 oder 11,
dadurch gekennzeichnet, daß die C₄-C₂₀ Carbonsäure oder ihr Derivat eine oberflächenaktive C₁₀-C₂₀ Carbonsäure oder ein oberflächenaktiver Ester von C₄-C₂₀ Carbonsäure ist.

14. Zusammensetzung nach Anspruch 13,
dadurch gekennzeichnet, daß der oberflächenaktive Ester der C₄-C₂₀ Carbonsäure ein Glyzerol- oder Kohlenhydrat-Ester ist, möglicherweise in polyäthoxylierter Form, wobei die bevorzugt verwendete Menge ungefähr 0,2-3 % von dem Gewicht der Zusammensetzung beträgt.

15. Zusammensetzung nach einem der vorhergehenden Ansprüche,
dadurch gekennzeichnet, daß der Bestandteil (3) aus Harnstoff besteht.

16. Zusammensetzung nach einem der vorhergehenden Ansprüche,
dadurch gekennzeichnet, daß der Bestandteil (3) aus Alkohol oder Polyol, vorzugsweise Glyzerol oder Propylenglykol besteht.

17. Zusammensetzung nach Anspruch 15 oder 16,
dadurch gekennzeichnet, daß die Menge von dem Harnstoff, Alkohol oder, Polyol 0,5-10 % des Gewichts der Zusammensetzung beträgt.

## Revendications

1. Composition convenant pour un additif de matière végétale et contenant un acide carboxylique aliphatique en C₁-C₃ et de l'acide benzoïque ou de l'acide hydroxybenzoïque, lesdits acides étant éventuellement au moins en partie sous forme de sels ou esters, caractérisée en ce qu'elle est sous une forme liquide stable et comprend les composants suivants :
(1) 5-25%, de la masse de la composition, d'acide benzoïque, de sel d'acide benzoïque, d'ester d'acide benzoïque, d'acide hydroxybenzoïque, de sel d'acide hydroxybenzoïque ou d'ester d'acide hydroxybenzoïque,
(2) 60-95%, de la masse de la composition, d'acide propionique et d'acide formique, d'acide propionique et d'acide acétique, ou d'acide propionique, d'acide formique et d'acide acétique,
(3) 0-10%, de la masse de la composition, d'un acide monocarboxylique aliphatique en C₄-C₁₀, d'ester d'acide monocarboxylique aliphatique en C₄-C₁₀, d'acide gras en C₁₀-C₂₀ tensioactif, de dérivé tensioactif d'acide gras en C₁₀-C₂₀, d'alcool, de polyalcool, ou de polymère agissant comme un agent épaississant, et
(4) 0-30%, de la masse de la composition, d'eau.

2. Composition selon la revendication 1, caractérisée en ce que la quantité d'acide benzoïque et/ou d'acide hydroxybenzoïque est d'environ 5-20% en masse.

3. Composition selon la revendication 1 ou 2, caractérisée en ce qu'elle contient du méthyl-, éthyl-, propyl- ou butylester de l'acide p-hydroxybenzoïque, la quantité préférable étant d'environ 0,5-2% en masse.

4. Composition selon l'une quelconque des revendications 1-3, caractérisée en ce que le composant (2) consiste en acide propionique et en acide acétique.

5. Composition selon la revendication 4, caractérisée en ce que le composant (1) consiste en acide benzoïque et en un sel de l'acide benzoïque, ladite partie sel constituant de préférence environ 20-80% de la masse totale des composants (1).

6. Composition selon l'une quelconque des revendications 1-3, caractérisée en ce que le composant (2) consiste en acide propionique et en acide formique, ou en acide propionique, en acide formique et en acide acétique.

7. Composition selon la revendication 6, caractérisée en ce que la quantité d'acide formique est d'environ 30-90%, de préférence d'environ 40-70% de la masse totale de la composition.

8. Composition selon la revendication 6 ou 7, caractérisée en ce que l'acide formique du composant (2) est au moins en partie sous forme de son ester, de préférence sous forme de formiate d'éthyle.

9. Composition selon l'une quelconque des revendications précédentes, caractérisée en la quantité du composant (1) est de 5-20%, de préférence d'environ 7-15%, de la masse de la composition, et le composant (4) est inférieur à 20%, de préférence d'environ 1-10% de la masse de la composition.

10. Composition selon l'une quelconque des revendications précédentes, caractérisée en ce que le composant (3) consiste en acide carboxylique en C₄-C₂₀ ou en son dérivé, de préférence un acide carboxylique liquide ou son dérivé.

11. Composition selon la revendication 10, caractérisée en ce qu'elle contient 0,5-10% en masse dudit acide carboxylique en C₄-C₂₀ ou de son dérivé.

12. Composition selon la revendication 10 ou 11, caractérisée en ce que l'acide carboxylique en C₄-C₂₀ ou son dérivé est un acide carboxylique en C₆-C₁₂ ou son ester, de préférence un acide carboxylique en C₇-C₁₀ ou son ester de glycérol ou de propylèneglycol.

13. Composition selon la revendication 10 ou 11, caractérisée en ce que l'acide carboxylique en C₄-C₂₀ ou son dérivé est un acide carboxylique en C₁₀-C₂₀ tensioactif ou un ester tensioactif d'un acide carboxylique en C₄-C₂₀.

14. Composition selon la revendication 13, caractérisée en ce que l'ester tensioactif de l'acide carboxylique en C₄-C₂₀ est un ester de glycérol ou de glucide, éventuellement sous forme polyéthoxylée, la quantité utilisée préférable étant d'environ de 0,2-3% de la masse de la composition.

15. Composition selon l'une quelconque des revendications précédentes, caractérisée en ce que le composant (3) consiste en urée.

16. Composition selon l'une quelconque des revendications précédentes, caractérisée en ce que composant (3) consiste en alcool ou en polyol, de préférence en glycérol ou en propylèneglycol.

17. Composition selon la revendication 15 ou 16, caractérisée en ce que la quantité durée, d'alcool ou de polyol est de 0,5-10% de la masse de la composition.
